(19) Europäisches Patentamt / European Patent Office / Office européen des brevets

(11) EP 2 648 924 B1

(12) # FASCICULE DE BREVET EUROPEEN

(45) Date de publication et mention de la délivrance du brevet:
**27.08.2014 Bulletin 2014/35**

(21) Numéro de dépôt: **11793744.1**

(22) Date de dépôt: **05.12.2011**

(51) Int Cl.:
***B60C 1/00*** (2006.01) ***B60C 11/03*** (2006.01)
***B60C 11/11*** (2006.01) ***B60C 11/12*** (2006.01)

(86) Numéro de dépôt international:
**PCT/EP2011/071721**

(87) Numéro de publication internationale:
**WO 2012/076456 (14.06.2012 Gazette 2012/24)**

(54) **BANDE DE ROULEMENT POUR PNEUMATIQUE**

LAUFFLÄCHE FÜR EINEN REIFEN

TREAD FOR A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2010 FR 1060219**

(43) Date de publication de la demande:
**16.10.2013 Bulletin 2013/42**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **FUGIER, Sébastien**
  **F-63040 Clermont-Ferrand Cedex 9 (FR)**
- **LOPEZ, Béatrice**
  **F-63040 Clermont-Ferrand Cedex 9 (FR)**

(74) Mandataire: **Demaure, Pierre-Yves**
**Manufacture Française**
**des Pneumatiques Michelin**
**23, place des Carmes - Déchaux**
**SGD/LG/PI - F35 - Ladoux**
**63040 Clermont-Ferrand Cedex 9 (FR)**

(56) Documents cités:
**EP-A2- 1 795 372 WO-A1-2004/022644**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 648 924 B1

## Description

DOMAINE DE L'INVENTION

La présente invention concerne une bande de roulement pour pneumatique neige et plus particulièrement une bande de roulement pour pneumatique neige ayant une sculpture asymétrique.

ETAT DE LA TECHNIQUE

Un pneumatique pour roulages hivernaux, dit pneumatique neige, doit obéir de manière connue à un grand nombre d'exigences techniques, souvent antinomiques, parmi lesquelles une faible résistance au roulement, une résistance élevée à l'usure, ainsi qu'une bonne adhérence sur un sol sec, sur un sol mouillé et sur un sol enneigé.

Les sols enneigés, dits sols blancs, ont pour caractéristiques de présenter un faible coefficient de frottement, ce qui conduit au développement de pneumatiques neige ayant une composition de caoutchouc spécifique. La performance d'adhérence sur un sol mouillé de ces pneumatiques peut être dans certaines conditions d'utilisation inférieure à celle des pneumatiques été.

L'optimisation de la bande de roulement pour trouver le meilleur compromis entre l'adhérence sur un sol mouillé et l'adhérence sur un sol enneigé reste donc une préoccupation constante des concepteurs de pneumatiques.

Des bandes de roulement connues sont décrites dans les documents EP-A-1795372 et WO-A-2004 022 644.

DEFINITIONS

Par « pneumatique », on entend tous les types de bandages élastiques soumis au cours d'un roulage à une pression interne ou non.

Par « pneumatique neige » (« snow tyre » ou « winter tyre » en anglais), on entend un pneumatique repéré par une inscription M+S ou M.S. ou encore M&S, marquée sur au moins un des flancs du pneumatique. Ce pneumatique neige se caractérise par un dessin de la bande de roulement et une structure destinés avant tout à assurer, dans la boue et la neige fraîche ou fondante, un comportement meilleur que celui d'un pneumatique du type routier (en anglais appelé « road type tyre ») conçu pour rouler sur des sols non enneigés.

Par « bande de roulement d'un pneumatique », on entend une quantité de composition de caoutchouc délimitée par des surfaces latérales et par deux surfaces principales dont une est destinée à entrer en contact avec un sol lorsque le pneumatique roule.

Par « surface de roulement », on entend la surface formée par les points de la bande de roulement du pneumatique qui entrent en contact avec le sol lorsque le pneumatique roule.

Par « bande de roulement asymétrique », on entend une bande de roulement présentant une sculpture non symétrique par rapport à un plan médian du pneumatique.

Par « motif de base », on entend un groupement particulier d'éléments en relief. Les motifs de base de la bande de roulement dérivent d'un même motif élémentaire à un rapport d'échelle près.

Par « pas d'un motif de base », on entend la longueur dudit motif de base selon une direction circonférentielle X.

Par « rainure » (« groove » en anglais), on entend une découpure (« cut-out » en anglais) dont les faces de matière ne se touchent pas dans les conditions usuelles de roulage. Généralement, la largeur d'une rainure est supérieure ou égale à 1 mm.

Par « incision » (« sipe » en anglais), on entend une découpure dont les faces de matière se touchent dans les conditions usuelles de roulage. Généralement, la largeur d'une incision est inférieure à 1 mm et la profondeur de l'incision dans la bande de roulement est supérieure ou égale à 3 mm.

Les propriétés dynamiques tan(δ) et G* caractérisent la composition de caoutchouc. Ces propriétés mécaniques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, lors d'un balayage en température. Les résultats exploités sont le module complexe de cisaillement dynamique G* mesuré à 60°C et le facteur de perte tan(δ) mesuré à 0°C sous une contrainte fixe de 0,7 MPa. La valeur de tan(δ) à 0°C est représentative du potentiel d'adhérence sur un sol mouillé. La valeur de G* mesurée à 60°C est représentative de la rigidité, c'est-à-dire de la résistance à la déformation élastique.

Le terme «pce» signifie parties en poids pour cent parties d'élastomère(s).

Par « direction circonférentielle », on entend une direction tangente à un cercle dont le centre est sur l'axe de rotation du pneumatique.

Par « direction transversale », on entend une direction parallèle à l'axe de rotation du pneumatique.

BREF EXPOSE DE L'INVENTION

Un premier objet de l'invention concerne une bande de roulement asymétrique pour pneumatique neige comprenant une sculpture et une composition de caoutchouc spécifiques telles que définies dans la revendication 1. La bande de roulement comporte ainsi une surface de roulement destinée à être en contact avec un sol au cours du roulage du pneumatique. La bande de roulement comporte une séquence de motifs de base arrangés selon la direction circonférentielle, chaque motif de base s'étendant sur au moins 80% de la largeur de la bande de roulement. Chaque motif de base comporte une pluralité d'éléments en relief pourvus d'incisions débouchant sur la surface de roulement, chaque incision ayant une largeur inférieure à 1 mm et une profondeur d'au moins 3 mm. Pour chaque motif de base, on définit un niveau d'orientation des incisions correspondant à $\frac{\sum_i |li * \alpha i|}{P * Wm}$ avec $\alpha i$ l'angle positif ou négatif formé sur la surface de roulement par la ième incision avec la direction transversale, avec $|\alpha i| \leq 45$ degrés, ledit niveau d'orientation étant supérieur ou égal à 1,5 degrés/$mm^2$ et la composition de caoutchouc comporte au moins un élastomère diénique, dit aussi premier élastomère diénique, une charge inorganique renforçante et un système plastifiant comprenant un agent plastifiant liquide selon un taux B compris entre 10 et 60 pce, ledit agent plastifiant liquide étant une huile végétale.

Des essais réalisés avec des pneumatiques conformes à l'invention ont mis en évidence que la combinaison de la composition de caoutchouc et de la sculpture telles que définies ci-dessus améliore le compromis entre l'adhérence sur un sol mouillé et l'adhérence sur un sol enneigé. En outre, la combinaison proposée par l'invention optimise le fonctionnement sur un sol mouillé des arêtes formées par les incisions et améliore particulièrement l'adhérence transversale, c'est-à-dire l'adhérence en courbe, lorsque le pneumatique roule sur ce sol mouillé.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (*Distillate Aromatic Extract*), les huiles MES (*Medium Extracted Solvates*), les huiles TDAE (*Treated Distillate Aromatic Extract*), les huiles RAE (*Residual Aromatic Extract*), les huiles TRAE (*Treated Residual Aromatic Extract*) et les huiles SRAE (*Safety Residual Aromatic Extract*), les huiles minérales, les huiles végétales, les plastifiants éthers, les plastifiants esters, les plastifiants phosphates, les plastifiants sulfonates et les mélanges de ces composés.

Les huiles végétales utilisables comme agents plastifiants, notamment dans des compositions de caoutchouc pour pneumatiques, sont bien connues ; elles ont été décrites par exemple dans les documents brevets EP 0 524 164, EP 747 466, EP 1 294 581, EP 1 329 478, EP 1 379 586, EP 1 577 341, EP 1 730 229, WO 2004/022644.

De manière connue, ces huiles végétales permettent notamment en plus de leur fonction plastifiante, de minimiser, dans la bande de roulement, d'une part l'exsudation en roulage par compression du système plastifiant total et, d'autre part, la migration dudit plastifiant vers des mélanges adjacents à la bande de roulement. Ceci se traduit par un tassement et un durcissement également minimisés pour la bande de roulement et, par conséquent, par une conservation dans le temps des performances d'adhérence.

Par élastomère (ou indistinctement "caoutchouc", les deux termes étant considérés comme synonymes) du type "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Plus préférentiellement, on utilise un premier élastomère diénique choisi dans le groupe constitué par les polybutadiènes (BR) (notamment ceux ayant un taux de liaisons cis-1,4 supérieur à 90%), les polyisoprènes de synthèse (IR), le caoutchouc naturel (NR), les copolymères de butadiène et les mélanges de ces élastomères ; de tels copolymères sont choisis plus préférentiellement dans le groupe constitué par les copolymères de butadiène-styrène (SBR) et les mélanges de tels copolymères.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse Tg, mesurée selon ASTM D3418) comprise entre 0°C et - 80°C, une teneur en styrène comprise entre 5% et 60% en poids et plus particulièrement entre 10% et 50%, une teneur (% molaire) en liaisons -1,2 de la partie butadiénique comprise entre 4% et 75%, une teneur (% molaire) en liaisons trans-1,4 comprise entre 10% et 80%.

Selon un mode de réalisation particulier de l'invention, le premier élastomère diénique a une température de

transition vitreuse comprise dans un domaine allant de -80°C à -35°C, préférentiellement allant de -70°C à -40°C.

Le premier élastomère diénique peut avoir toute microstructure qui est fonction des conditions de polymérisation utilisées, notamment de la présence ou non d'un agent modifiant et/ou randomisant et des quantités d'agent modifiant et/ou randomisant employées. Cet élastomère peut être par exemple à blocs, statistique, séquencé, microséquencé, et être préparé en dispersion ou en solution.

Une caractéristique préférentielle de la composition de caoutchouc de la bande de roulement du pneumatique neige conforme à l'invention est de comporter un premier élastomère diénique portant au moins une (c'est-à-dire une ou plusieurs) fonction SiOR, R étant l'hydrogène ou un radical hydrocarboné, notamment un alkyle, ayant préférentiellement 1 à 12 atomes de carbone, en particulier méthyle ou éthyle.

On entend par radical hydrocarboné, un groupement monovalent essentiellement constitué d'atomes de carbone et d'hydrogène, un tel groupement pouvant comporter au moins un hétéroatome, sachant que l'ensemble constitué par les atomes de carbone et d'hydrogène représente la fraction numérique majoritaire dans le radical hydrocarboné.

Selon un mode particulier de réalisation de l'invention, le radical hydrocarboné est un alkyle, ramifié ou linéaire ou encore cyclique, ayant 1 à 12 atomes de carbone, plus préférentiellement de 1 à 6 atomes de carbone, encore plus préférentiellement de 1 à 4 atomes de carbone, en particulier un méthyle ou un éthyle.

Selon un autre mode de réalisation particulier de l'invention, le radical R est un alkoxyalkyle, plus particulièrement ayant 2 à 8 atomes de carbone.

Dans la présente demande, on utilise le terme « la fonction SiOR » pour désigner au moins une fonction SiOR, c'est-à-dire une ou plusieurs fonctions SiOR.

De façon générale, une fonction portée par un élastomère peut être située sur la chaîne élastomère selon l'une des trois configurations possibles : le long de la chaîne élastomère comme groupe pendant, à une extrémité de la chaîne élastomère ou bien à l'intérieur même (c'est-à-dire en dehors des extrémités) de la chaîne élastomère. Ce dernier cas se présente notamment dans le cas où l'élastomère est fonctionnalisé par l'utilisation d'un agent de couplage ou d'étoilage qui apporte la fonction en question.

En particulier, la fonction SiOR portée par le premier élastomère diénique peut se situer le long de la chaîne élastomère comme groupe pendant, à une extrémité de la chaîne élastomère ou bien à l'intérieur même de la chaîne élastomère. Dans le cas où il y a plusieurs fonctions SiOR portées par l'élastomère, elles peuvent occuper l'une ou l'autre des configurations ci-dessus.

Le premier élastomère diénique peut être un polymère linéaire ou étoilé, voire branché. Si c'est un polymère linéaire, il peut être couplé ou non. Cet élastomère peut avoir une distribution moléculaire monomodale, bimodale ou polymodale.

Selon un autre mode de réalisation préférentiel de l'invention, le premier élastomère diénique est majoritairement sous une forme linéaire, c'est-à-dire que s'il comporte des chaînes étoilées ou branchées, celles-ci représentent une fraction pondérale minoritaire dans cet élastomère.

Selon un autre mode de réalisation particulier de l'invention, le premier élastomère diénique est préparé par polymérisation anionique.

Selon un mode de réalisation particulièrement préférentiel, le premier élastomère diénique est porteur d'au moins une (c'est-à-dire une ou plusieurs) fonction dite « silanol » de formule SiOH (R est l'hydrogène).

Des élastomères diéniques correspondant à une telle définition sont bien connus, ils ont par exemple été décrits dans les documents EP 0 778 311 B1, WO 2008/141702, WO 2006/050486, EP 0877 047 B1 ou EP 1 400 559 B1. La fonction silanol SiOH est préférentiellement située en extrémité de chaîne de l'élastomère diénique, en particulier sous la forme d'un groupement diméthylsilanol $-SiMe_2SiOH$.

Selon un mode de réalisation particulier de l'invention, la fonction silanol peut être liée à un polysiloxane qui constitue l'un des blocs d'un copolymère bloc comprenant aussi un bloc polydiène, comme par exemple décrit dans le brevet EP 0 778 311 B1.

Selon un autre mode de réalisation particulier de l'invention, la fonction silanol peut être liée à un polyéther constituant l'un des blocs d'un copolymère bloc comprenant aussi un bloc polydiène, comme décrit par exemple dans la demande WO 2009/000750.

Selon un autre mode de réalisation particulièrement préférentiel, le premier élastomère diénique est porteur d'au moins une (c'est-à-dire une ou plusieurs) fonction de formule SiOR dans laquelle R est un radical hydrocarboné.

Des élastomères diéniques correspondant à une telle définition sont également bien connus, ils ont par exemple été décrits dans les documents JP 63-215701, JP 62-227908, US 5 409 969 ou WO 2006/050486.

Selon un mode de réalisation particulier, la fonction SiOR (avec R radical hydrocarboné), notamment alcoxysilane, peut être liée à un polyéther qui constitue l'un des blocs d'un copolymère bloc comprenant aussi un bloc polydiène, comme décrit par exemple dans la demande WO 2009/000750.

Selon un autre mode de réalisation particulièrement préférentiel, le premier élastomère diénique, porteur d'au moins une (c'est-à-dire une ou plusieurs) fonction de formule SiOR dans laquelle R est l'hydrogène ou un radical hydrocarboné, est également porteur d'au moins une autre (c'est-à-dire une ou plusieurs) fonction qui est différente de

la fonction SiOR. Cette autre fonction est choisie préférentiellement dans le groupe constitué par les fonctions époxy, étain ou amine, l'amine pouvant être une amine primaire, secondaire ou tertiaire. Les fonctions amine sont particulièrement préférées.

Selon un autre mode de réalisation particulièrement préférentiel, applicable à chacun des modes de réalisation précédemment décrits, le premier élastomère diénique comprend, outre les unités diéniques, des unités vinylaromatiques, en particulier des unités styrène. Préférentiellement les unités diéniques sont des unités butadiène, préférentiellement associés à des unités styrène. Avantageusement il s'agit d'un copolymère de styrène et de butadiène, SBR, préférentiellement d'un SBR solution (SSBR).

Selon un mode de réalisation tout particulièrement préférentiel de l'invention, le SBR comme premier élastomère diénique, a une température de transition vitreuse comprise dans un domaine allant de -80°C à -35°C, de préférence de -70°C à -40°C.

Ainsi, selon un mode de réalisation avantageux de l'invention, le premier élastomère diénique est un SBR, de préférence un SSBR, portant au moins une fonction silanol, préférentiellement positionnée en extrémité de chaîne.

Selon un mode de réalisation encore plus préférentiel de l'invention, le premier élastomère diénique est un SBR, de préférence un SSBR, portant une seule fonction silanol, préférentiellement positionnée en extrémité de chaîne.

Selon un autre mode de réalisation avantageux de l'invention, le premier élastomère diénique est un SBR, de préférence un SSBR, portant au moins une fonction SiOR (avec R radical hydrocarboné), notamment alcoxysilane, et au moins une fonction amine, de préférence tertiaire, préférentiellement toutes deux positionnées dans la chaîne, et encore plus préférentiellement à l'intérieur de la chaîne élastomère.

Selon un mode de réalisation encore plus préférentiel de l'invention, le premier élastomère diénique est un SBR, de préférence un SSBR, portant une seule fonction alcoxysilane et une seule fonction amine, de préférence tertiaire, préférentiellement toutes deux positionnées dans la chaîne, et encore plus préférentiellement à l'intérieur de la chaîne élastomère.

Il est entendu que le premier élastomère diénique portant une fonction SiOR peut être constitué par un mélange d'élastomères qui se différencient des uns des autres par la nature chimique de la fonction SiOR, par sa position sur la chaîne élastomère, par la présence d'une fonction supplémentaire autre que SiOR, par leur microstructure ou encore par leur macrostructure.

Le taux du premier élastomère diénique est préférentiellement compris dans un domaine allant de 20 à 100 pce, plus préférentiellement de 40 à 100 pce, encore plus préférentiellement de 50 à 100 pce.

Lorsque la composition de la bande de roulement du pneumatique conforme à l'invention comporte un deuxième élastomère diénique, optionnel, cet élastomère est différent du premier élastomère diénique dans la mesure où il ne porte pas de fonction SiOR. Néanmoins ce deuxième élastomère diénique peut avoir une microstructure ou une macrostructure qui peuvent être identiques à ou différentes de celles du premier élastomère diénique. Il est utilisé dans une proportion allant de 0 à 80 pce, préférentiellement de 0 à 60 pce, encore plus préférentiellement de 0 à 50 pce.

Selon un mode de réalisation préférentiel de l'invention, ce deuxième élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

Selon un mode de réalisation particulier de l'invention, ce deuxième élastomère diénique est un polybutadiène. Le polybutadiène est préférentiellement un polybutadiène cis-1,4, c'est-à-dire un polybutadiène ayant un taux de liaisons cis-1,4 supérieur à 90% (% molaire), préférentiellement supérieur ou égal à 96% (% molaire).

Selon un autre mode de réalisation particulier de l'invention, ce deuxième élastomère diénique est un copolymère de butadiène, notamment un SBR, de préférence un SBR solution.

Selon un autre mode de réalisation particulier de l'invention, ce deuxième élastomère peut porter au moins une fonction (bien entendu autre qu'une fonction SiOR), en particulier une fonction étain. Ce deuxième élastomère est avantageusement un élastomère diénique couplé ou étoilé à l'étain.

Il est entendu que le deuxième élastomère diénique peut être constitué par un mélange d'élastomères qui se différencient des uns des autres par leur microstructure, par leur macrostructure ou par la présence d'une fonction, par la nature ou la position de cette dernière sur la chaîne élastomère.

Dans un mode de réalisation préférentiel, la charge inorganique renforçante comprend de 50 à 100% en masse de silice.

Selon l'invention, la composition de caoutchouc comprend 100 à 160 pce de la charge inorganique renforçante.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2$/g, de préférence de 30 à 400 $m^2$/g, notamment entre 60 et 300 $m^2$/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387.

Selon un autre mode de réalisation avantageux, la composition de caoutchouc de la bande de roulement du pneumatique neige conforme à l'invention, peut comporter du noir de carbone. Le noir de carbone, lorsqu'il est présent, est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante :

(I) $$Z - A - S_x - A - Z$$

, dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après :

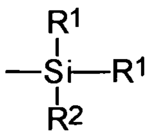 ; 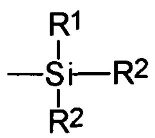 ; 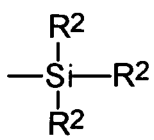 ,

dans lesquelles :

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfurés, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

De préférence, on associe à l'huile végétale précédemment décrite, une résine hydrocarbonée à un taux préférentiellement compris entre 10 et 60 pce.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods'). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine hydrocarbonée est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 $\mu$m, avant injection dans l'appareillage. L'appareillage utilisé est par exemple une chaîne chromatographique "Waters alliance" selon les conditions suivantes :

- solvant d'élution est le tétrahydrofurane,
- température 35°C ;
- concentration 1 g/litre ;
- débit : 1 ml/min ;
- volume injecté : 100 $\mu$l ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :

- une Tg supérieure à 25°C (en particulier compris entre 30°C et 100°C), plus préférentiellement supérieure à 30°C (en particulier compris entre 30°C et 95°C) ;

- un point de ramollissement supérieur à 50°C (en particulier compris entre 50°C et 150°C);

- une masse molaire moyenne en nombre (Mn) comprise entre 400 et 2000 g/mol, préférentiellement entre 500 et 1500 g/mol ;

- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe $C_5$/ styrène ou résines coupe $C_5$/ coupe $C_9$, ou encore par la société Struktol sous dénomination "40 MS" ou "40 NS" (mélanges de résines aromatiques et/ou aliphatiques).

Selon un mode de réalisation préférentiel de l'invention, le taux A de résine hydrocarbonée est compris entre 10 et 50 pce et le taux B de plastifiant liquide est compris entre 10 et 50 pce.

Selon un autre mode de réalisation préférentiel de l'invention, le taux total A+B de résine hydrocarbonée et de plastifiant liquide est compris entre 50 et 100 pce, plus préférentiellement est compris dans un domaine allant de 55 à 90 pce, notamment de 60 à 85 pce.

Selon un autre mode de réalisation particulier de l'invention, le rapport de A sur B est compris entre 1 : 5 et 5 : 1 (soit entre 0,2 et 5,0), préférentiellement entre 1 : 4 et 4 : 1 (soit entre 0,25 et 4,0).

Selon un autre mode de réalisation particulier de l'invention, le rapport massique de (A+B) sur la masse de charge inorganique renforçante, notamment de silice, est compris entre 50 et 80%, préférentiellement compris dans un domaine allant de 55 à 75%.

La dénomination "résine" est réservée dans la présente demande, par définition connue de l'homme du métier, à un composé qui est solide à température ambiante (23°C), par opposition à un composé plastifiant liquide tel qu'une huile.

A titre d'exemple d'huile végétale, peut être citée une huile choisie dans le groupe constitué par les huiles de lin, carthame, soja, maïs, coton, navette, ricin, abrasin, pin, tournesol, palme, olive, noix de coco, arachide, pépin de raisin et les mélanges de ces huiles. L'huile végétale est préférentiellement riche en acide oléique, c'est-à-dire que l'acide gras (ou l'ensemble des acides gras si plusieurs sont présents) dont elle dérive, comporte de l'acide oléique selon une fraction massique au moins égale à 60%, encore plus préférentiellement selon une fraction massique au moins égale à 70%. A titre d'huile végétale, est utilisée avantageusement une huile de tournesol qui est telle que

l'ensemble des acides gras dont elle dérive comprend l'acide oléique selon une fraction massique égale ou supérieure à 60%, de préférence à 70% et, selon un mode particulièrement avantageux de réalisation de l'invention, selon une fraction massique égale ou supérieure à 80%.

Dans une variante de réalisation préférentielle, l'huile végétale est une huile de tournesol.

L'utilisation de l'huile de tournesol à titre de plastifiant dans la composition de la bande de roulement selon l'invention contribue d'avantage à la préservation de l'environnement, de par la nature non polluante d'une telle huile naturelle.

Les compositions de caoutchouc des bandes de roulement des pneumatiques conformes à l'invention peuvent comporter également tout ou partie des additifs usuels habituellement utilisés dans les compositions d'élastomères destinées à la fabrication de bandes de roulement de pneumatiques, notamment pneumatiques hiver, des charges autres que celles précitées, par exemple des charges non renforçantes comme la craie, ou bien des charges lamellaires comme le kaolin, le talc, des pigments, des agents de protection tels que cires anti-ozone, anti-ozonants chimiques, antioxydants, des résines renforçantes (tels que résorcinol ou bismaléimide), des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs ou retardateurs de vulcanisation, des activateurs de vulcanisation.

Les compositions utilisées dans les bandes de roulement des pneumatiques de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :

- malaxer thermomécaniquement (par exemple en une ou plusieurs fois) le ou les élastomères diéniques avec la charge inorganique renforçante, l'agent de couplage, le cas échéant le noir de carbone, le système plastifiant, jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques, le système plastifiant, la charge inorganique renforçante et l'agent de couplage), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement de pneumatique hiver.

Selon un mode de réalisation particulier, la dureté Shore A de la composition de caoutchouc selon l'invention est comprise dans un domaine allant de 50 à 70, notamment de 55 à 65. La dureté Shore A des compositions après cuisson est appréciée conformément à la norme ASTM D 2240-86.

Dans une variante de réalisation, on définit une densité d'incisions correspondant à $\frac{\sum_i li}{P * Wm}$, ladite densité d'incisions étant supérieure ou égale à 60 $\mu$m/mm$^2$.

Avec une telle densité d'incision, on améliore particulièrement l'adhérence sur un sol enneigé.

Dans une variante de réalisation, on définit un critère de tirage (CT) du motif de base correspondant à

$$\left| \frac{\left| \sum_i li * \alpha i \right|}{\sum_i \left| li * \alpha i \right|} \right|,$$

ledit critère de tirage étant inférieur ou égal à 0,2.

Les incisions inclinées forment des arêtes inclinées sur la surface de roulement de la bande de roulement. Un sol sec induit des efforts longitudinaux importants sur la bande de roulement du pneumatique. Sous l'effet de ces efforts longitudinaux, une partie des arêtes inclinées formées par les incisions génère des efforts transversaux résiduels qui peuvent se transmettre au dispositif de direction du véhicule.

En choisissant l'orientation et la longueur des incisions de la bande de roulement selon les critères de l'invention, on s'assure que les effets de tirage latéral liés aux incisions se compensent, au moins en partie, au niveau de chaque motif de base du pneumatique. De cette manière, on limite le tirage latéral global du pneumatique au cours d'un roulage sur un sol sec tout en améliorant l'adhérence de ce pneumatique sur un sol enneigé.

Préférentiellement, tout ou partie des éléments en relief des motifs de base comprennent au moins un chanfrein, ledit chanfrein appartenant à une arête des éléments en relief faisant un angle au plus égal à 45 ° avec la direction transversale.

L'utilisation d'un tel chanfrein permet d'éviter l'arrachement de caoutchouc de cette arête sous forte sollicitation, par exemple lors d'un freinage sur un sol sec. On limite ainsi l'usure de la bande de roulement.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la figure 1 représente schématiquement une vue partielle d'une bande de roulement d'un pneumatique conforme à l'invention ;
- la figure 2 illustre comment le bord axial d'une bande de roulement est déterminé selon une première méthode de détermination ;
- la figure 3 illustre comment le bord axial d'une bande de roulement est déterminé selon une seconde méthode de détermination ;
- la figure 4 représente plus particulièrement un motif de base de la bande de roulement de la figure 1.

Dans la description qui va suivre, des éléments identiques ou similaires seront désignés par des références identiques.

La figure 1 présente partiellement la surface de roulement d'une bande de roulement 1.

La bande de roulement 1 comprend une séquence de n motifs de base 3, 5 agencés selon la direction circonférentielle X, avec n un entier naturel supérieur ou égal à 1. Pour faciliter la compréhension de la figure 1, on a représenté seulement un premier motif de base 3 et un second motif de base 5.

Chaque motif de base 3, 5 s'étend selon la direction circonférentielle X selon un pas P déterminé.

Le pas du premier motif de base 3 est ici identique au pas du second motif de base 5. En variante, les pas des motifs de base sont différents.

Chaque motif de base 3, 5 s'étend sur au moins 80% de la largeur W de la bande de roulement. Dans l'exemple de la figure 1, la largeur Wm du motif de base 3, 5 est ici sensiblement identique à la largeur W de la bande de roulement.

La largeur W de la bande de roulement correspond à la distance entre un premier bord axial 7 et un second bord axial 9 de la bande de roulement.

La manière dont on détermine la largeur W d'une bande de roulement est illustrée aux figures 2 et 3 qui montrent chacune le profil partiel d'une bande de roulement 1 et la partie d'un flanc 8 qui lui est adjacente. Dans certaines architectures de pneumatique, la transition de la bande de roulement vers les flancs est très nette, comme dans le cas représenté à la figure 2, et la détermination du premier bord axial 7 et du second bord axial (non représenté) est intuitive.

Il existe cependant des architectures de pneumatique où la transition entre la bande de roulement et les flancs est continue. Un exemple est représenté à la figure 3.

Sur cette figure 3, on détermine le premier bord axial 7 et le second bord axial de la bande de roulement comme suit. On trace, dans une coupe radiale du pneumatique, la tangente à la surface de roulement en tout point de ladite surface de roulement dans la zone de transition vers le flanc. Le premier bord axial 7 est le point dans lequel l'angle P (béta) entre ladite tangente et une direction axiale est égal à 30°. Lorsqu'il existe plusieurs points pour lesquels l'angle $\beta$ entre ladite tangente et une direction axiale est égal à 30°, on retient le point radialement le plus à l'extérieur. On procédera de la même manière pour déterminer le second bord axial de la bande de roulement.

La figure 4 présente plus particulièrement le premier motif de base 3 de la figure 1.

Le premier motif de base 3 comprend ici 11 éléments en relief, dénommés respectivement premier élément en relief 11a, second élément en relief 11b, troisième élément en relief 11c, quatrième élément en relief 11d, cinquième élément en relief 11e, sixième élément en relief 11f, septième élément en relief 11g, huitième élément en relief 11h, neuvième élément en relief 11i, dixième élément en relief 11j, onzième élément en relief 11k.

Le premier motif de base 3 est pourvu de i incisions 13i débouchant sur la surface de roulement, avec i un entier naturel supérieur à 1.

Les i incisions sont réparties sur les différents éléments en relief 11 a-11k.

Pour chaque incision 13i, il est possible de déterminer une longueur d'incision li correspondant à la longueur de la trace de ladite incision sur la surface de roulement.

On détermine également pour chaque incision 13i un angle $\alpha i$ (alpha i), avec $|\alpha i| \leq 45$ degrés. L'angle $\alpha i$ correspond à l'angle formé par la ième incision 13i avec la direction transversale Y.

On explique dans la suite de la description la manière dont sont définis les angles des incisions.

L'angle d'incision est dit positif par rapport à la direction transversale Y si la rotation qui amène ladite direction transversale Y à la trace de l'incision sur la surface de roulement se fait dans le sens trigonométrique direct.

A contrario, l'angle d'incision est dit négatif par rapport à la direction transversale Y si la rotation qui amène ladite direction transversale Y à la trace de l'incision sur la surface de roulement se fait dans le sens trigonométrique inverse, c'est-à-dire dans le sens horaire.

Ainsi, le premier élément 11a et le second élément 11b ont des incisions formant un angle globalement nul avec la direction transversale Y.

De la même manière, le troisième élément 11c, le quatrième élément 11d, le cinquième élément 11e, le sixième élément 11f, le huitième élément 11h et le dixième élément 11j ont des incisions formant un angle positif avec la direction transversale Y.

Enfin, le septième élément 11g, le neuvième élément 11i et le onzième élément 11k ont des incisions formant un angle négatif avec la direction transversale Y.

Les incisions appartenant à un même élément en relief sont ici orientées avec le même angle.

En variante, il est possible d'avoir des incisions d'orientation différente dans un même élément en relief.

On définit également pour le motif de base 3 une densité d'incisions D, un niveau d'orientation des incisions NO et un critère de tirage CT.

La densité d'incisions D correspond à l'équation $\frac{\sum_i li}{P * Wm}$. Pour rappel, i est le nombre d'incisions dans le motif de base, li est la longueur de la ième incision sur la surface de roulement, P est le pas du motif de base et Wm est la largeur du motif de base.

Le niveau d'orientation NO des incisions correspond à l'équation $\frac{\sum_i |li * \alpha i|}{P * Wm}$. Pour rappel, $\alpha i$ est l'angle positif ou négatif formé sur la surface de roulement par la ième incision avec la direction transversale Y et on a $|\alpha i| \leq 45$ degrés.

Le critère de tirage CT du motif de base correspond à l'équation $\left|\frac{\sum_i li*\alpha i}{\sum_i |li*\alpha i|}\right|$.

Le nombre d'incisions 13i dans le motif des base 3, la longueur des incisions et l'angle des incisions sont déterminés de sorte que la densité d'incision est supérieure ou égale à 60 $\mu m/mm^2$, le niveau d'orientation des incisions est supérieur ou égal à 1,5 degrés/mm et le critère de tirage du motif est inférieur ou égal à 0,2.

De cette manière, on garantit un faible tirage latéral du pneumatique au cours d'un roulage sur un sol sec tout en conservant une bonne adhérence de ce pneumatique sur un sol enneigé.

Avantageusement, le critère de tirage du motif est inférieur à 0,1.

Dans une autre variante, le critère de tirage du motif est inférieur à 0,05.

A titre d'exemple, on a répertorié dans le tableau ci-dessous les caractéristiques des incisions présentes dans les différents éléments en relief de la figure 4. Dans ce tableau, la première ligne référence les différents éléments en relief du motif de base 3, la seconde ligne détaille les angles des incisions associées aux différents éléments en relief et la troisième ligne détaille la longueur totale des incisions présentes dans les différents éléments en relief.

| Eléments en relief | 11a | 11b | 11c | 11d | 11e | 11f | 11g | 11h | 11i | 11j | 11k |
|---|---|---|---|---|---|---|---|---|---|---|---|
| Angle des incisions en degrés | 0 | 0 | 4,5 | 4,5 | 12 | 20 | -30 | 35 | -30 | 18 | -30 |
| Longueur totale des incisions (mm) | 50 | 50 | 50 | 50 | 250 | 245 | 170 | 70 | 90 | 160 | 220 |

En prenant un pas de motif de base de l'ordre de 50 mm et une largeur de motif Wm de 230 mm, on calcule une densité d'incisions D de l'ordre de 122 $\mu m/mm^2$, un niveau d'orientation NO de 2,44 degrés/mm et un critère de tirage CT de 0,025.

On notera ici que la forme des éléments en relief 11a-11k et leur agencement sur la bande de roulement sont déterminés de sorte que la sculpture ainsi formée soit asymétrique. Le pneumatique a donc un sens de montage prédéterminé de sorte qu'un flanc du pneumatique se trouve toujours à l'extérieur du véhicule et ceci quelque soit sa position de montage (droite ou gauche) par rapport au véhicule. Ces pneumatiques sont en général pourvus d'un marquage (« outside » ou « inside ») indiquant à l'utilisateur quel flanc du pneumatique doit être tourné vers l'extérieur du véhicule, ci-après dénommé flanc externe, et quel flanc du véhicule doit être tourné vers l'intérieur du véhicule, ci-après dénommé flanc interne. En fonction du marquage du pneumatique, il est possible de déterminer sur la figure 4 une demi-bande de roulement interne 17 et une demi-bande de roulement externe 15. En effet, la demi-bande de roulement interne est la demi-bande de roulement adjacente au flanc interne et la demi-bande de roulement externe est la demi-bande de roulement adjacente au flanc externe. On notera qu'un plan médian 19 sépare la demi-bande de roulement interne 17 et la demi-bande de roulement externe 15.

Sur la figure 4, la demi-bande de roulement interne comprend le septième élément 11g, le huitième élément 11h, le neuvième élément 11i, le dixième élément 11j, le onzième élément 11 k. De la même manière, la demi-bande de roulement externe comprend le premier élément 11a le second élément 11b, le troisième élément 11c, le quatrième élément 11d, le cinquième élément 11e et le sixième élément 11f.

On notera que la demi-bande de roulement interne a un rôle important dans le fonctionnement du pneumatique puisque c'est la partie de la bande de roulement qui est la plus sollicitée pour assurer l'adhérence sur un sol enneigé, et plus particulièrement lors de prises de virages. Ainsi, afin d'améliorer cette adhérence en virage, on donne aux incisions de la demi-bande de roulement interne une plus forte inclinaison par rapport à la direction transversale. On s'arrange notamment pour que le niveau d'orientation NO des incisions disposées sur les éléments en relief 11g-11k soit supérieur à 2 degrés/mm. Dans l'exemple du tableau décrit ci-dessus et en prenant une largeur de demi-bande de roulement interne égale à Wm/2, on détermine ainsi un niveau d'orientation de ces incisions de l'ordre de 3,43 degrés/mm.

Dans une variante de réalisation, tout ou partie des éléments en relief des motifs de base comprennent au moins un chanfrein, ledit chanfrein appartenant à une arête des éléments en relief faisant un angle au plus égal à 45 ° avec la direction transversale.

Le tableau 1 ci-dessous décrit la nature d'une composition C1 conventionnelle utilisable pour constituer une bande de roulement de pneumatique hiver, à base de polybutadiène et de copolymère SBR (SBR1).

Dans cette composition témoin, les deux élastomères utilisés sont notamment, dépourvus de fonction SiOR ; le taux de charge inorganique renforçante est inférieur à 100 pce, et le taux A+B de système plastifiant est inférieur à 50 pce, constitué de résine plastifiante polylimonène (20 pce), d'huile végétale de tournesol (15 pce) et d'huile MES (5 pce) à titre d'agent plastifiant liquide.

La composition C2, conforme à l'invention, se caractérise par la présence d'au moins 20 pce d'un élastomère

diénique portant une fonction silanol, d'au moins 100 pce d'une charge inorganique renforçante, de plus de 50 pce d'un système plastifiant constitué de résine plastifiante (polylimonène) et d'agent plastifiant liquide (huile végétale de tournesol) à des taux respectivement compris entre 10 et 60 pce. L'élastomère SBR2 de la composition C2 contient un mélange de 85% d'un SBR portant une fonction diméthylsilanol à une extrémité de chaîne et 15% de SBR étoilé à l'étain et de même microstructure.

**Tableau 1**

| Composition n° : | C1 | C2 |
|---|---|---|
| BR (1) | 40 | - |
| IR (2) | - | 50 |
| SBR1 (3) | 60 | - |
| SBR2 (4) | - | 50 |
| Noir de carbone (5) | 5 | 5 |
| Silice (6) | 90 | 115 |
| Agent de couplage (7) | 7.2 | 9.2 |
| Plastifiant liquide (8) | 5 | - |
| Plastifiant liquide (9) | 15 | 40 |
| Résine (10) | 20 | 35 |
| Total plastifiant | 40 | 75 |
| Acide stéarique | 3 | 3 |
| Cire anti-ozone | 1.5 | 1.5 |
| Antioxydant (11) | 2 | 2 |
| DPG (12) | 2.1 | 2.1 |
| ZnO | 1.2 | 1.2 |
| Accélérateur (13) | 1.6 | 1.6 |
| Soufre | 1.4 | 1.4 |

1) BR avec 4% de motif 1,2 et 93% de 1,4-cis (Tg = -106°C );
2) polyisoprène de synthèse (« SKI-3S » commercialisé par Nizhnekamsk);
3) SBR1 : SBR avec 27% de motif styrène et 57% de motif 1,2 de la partie butadiénique (Tg = - 24°C) ;
4) SBR2 : SBR (étoilé Sn) avec 27% de motif styrène et 24% de motif 1,2 de la partie butadiénique porteur d'une fonction silanol en extrémité de la chaîne élastomère (Tg -48°C) ;
5) Grade ASTM N234 (société Cabot) ;
6) Silice « Zeosil 1165 MP » de la société Rhodia type « HDS »
7) TESPT (« Si69 » de la société Degussa) ;
8) Huile MES ("Catenex SNR" de Shell)
9) Huile de tournesol à 85 % en poids d'acide oléique, « Lubrirob Tod 1880» de la société Novance;
10) résine C5/C9 (« Escorez ECR-373 » de la société Exxon) ;
11) N-(1,3-diméthylbutyl)-N'-phényl-p-phénylènediamine, de la société Flexsys
12) Diphénylguanidine (« Perkacit » DPG de la société Flexsys) ;
13) N-dicylohexyl-2-benzothiazol-sulfénamide (« Santocure CBS » de la société Flexsys).

Ces deux compositions ont été extrudées sous la forme d'une bande de roulement, pour être ensuite testées.

Les compositions C1 et C2 sont utilisées comme bandes de roulement de pneumatiques tourisme hiver à carcasse radiale, notés respectivement P1 (pneu témoin), P2 (pneu conforme à l'invention), de dimensions 225/45 R17 conventionnellement fabriqués. Le pneu témoin P1 est un pneumatique neige commercial de sculpture conventionnelle. Le pneu P2 comporte une sculpture conforme à l'invention. Les pneus P1 et P2 se distinguent ainsi par leur composition de caoutchouc et leur sculpture.

Les pneumatiques P1 et P2 sont ensuite soumis à des tests de freinage en ligne droite sur un sol humide et

sur un sol enneigé.

Pour tester le freinage sur sol mouillé, les pneumatiques sont montés sur un véhicule automobile de marque Audi et de modèle A4, équipé d'un système de freinage ABS et la distance nécessaire pour passer de 80 km/h à 10 km/h est mesurée lors d'un freinage brutal sur sol arrosé (béton bitumineux).

Pour tester le freinage sur sol enneigé, les pneumatiques sont montés sur un véhicule automobile de marque Volkswagen et de modèle Golf, équipé d'un système de freinage ABS et la distance nécessaire pour passer de 50 km/h à 5 km/h est mesurée lors d'un freinage d'urgence sur neige.

On constate que le pneumatique neige conforme à l'invention P2 présente une adhérence sur sol mouillé améliorée de l'ordre de 5% par rapport au pneumatique témoin P1. On note en outre que ce résultat est obtenu sans être au détriment de la performance sur sol enneigé. Au contraire, le pneumatique neige P2 présente une adhérence sur sol enneigé améliorée de l'ordre de 4% par rapport au pneumatique témoin P1.

Des tests de freinage complémentaires ont été réalisés sur un circuit sinueux dans des conditions humides. Il a été constaté que le pneumatique neige P2 présente également une adhérence transversale sur sol mouillé, c'est-à-dire une adhérence en courbe, améliorée par rapport au pneumatique témoin P1.

## Revendications

1. Bande de roulement asymétrique pour pneumatique neige comprenant une composition de caoutchouc, ladite bande de roulement (1) comportant une surface de roulement destinée à être en contact avec un sol au cours du roulage du pneumatique, ladite bande de roulement (1) comportant une séquence de motifs de base (3, 5) arrangés selon la direction circonférentielle (X), chaque motif de base s'étendant sur au moins 80% de la largeur (W) de la bande de roulement (1), chaque motif de base (3, 5) comportant une pluralité d'éléments en relief (11a-11k) pourvus d'incisions (13i) débouchant sur la surface de roulement, chaque incision ayant une largeur inférieure à 1 mm et une profondeur d'au moins 3 mm, ladite bande de roulement étant **caractérisée en ce que** pour chaque motif de base (3, 5), on définit un niveau d'orientation des incisions (NO) correspondant à $\frac{\sum_i |li * \alpha i|}{P * Wm}$ avec i le nombre d'incisions dans le motif, li la longueur de la ième incision sur la surface de roulement, P le pas du motif de base, Wm la largeur du motif de base, $\alpha i$ l'angle positif ou négatif formé sur la surface de roulement par la ième incision avec la direction transversale, avec $|\alpha i| \leq 45$ degrés, ledit niveau d'orientation étant supérieur ou égal à 1,5 degrés/mm et **en ce que** la composition de caoutchouc comporte au moins un élastomère diénique, une charge inorganique renforçante et un système plastifiant comprenant un agent plastifiant liquide selon un taux B compris entre 10 et 60 pce, ledit agent plastifiant liquide étant une huile végétale et **en ce que** la composition de caoutchouc comprend 100 à 160 pce de ladite charge inorganique renforçante.

2. Bande de roulement selon la revendication 1, **caractérisée en ce que** ladite composition de caoutchouc comporte 20 à 100 pce d'un élastomère diénique portant au moins une fonction SiOR, R étant l'hydrogène ou un radical hydrocarboné.

3. Bande de roulement selon l'une quelconque des revendications 1 ou 2, **caractérisée en ce que** la charge inorganique renforçante comprend de 50 à 100% en masse de silice.

4. Bande de roulement selon l'une quelconque des revendications 1 à 3, **caractérisée en ce que** le système plastifiant comprend une résine hydrocarbonée selon un taux A compris entre 10 et 60 pce.

5. Bande de roulement selon la revendication 4, **caractérisée en ce que** le taux total A+B est supérieur à 50 pce.

6. Bande de roulement selon l'une quelconque des revendications 1 à 5, **caractérisée en ce que** l'huile végétale est une huile de tournesol.

7. Bande de roulement selon l'une quelconque des revendications 1 à 6, **caractérisée en ce qu'**on définit une densité d'incisions (D) correspondant à $\frac{\sum_i li}{P * Wm}$, ladite densité d'incisions étant supérieure ou égale à 60 $\mu$m/mm$^2$.

8. Bande de roulement selon l'une quelconque des revendications 1 à 7, **caractérisée en ce qu'**on définit un critère de tirage (CT) du motif de base correspondant à $\left|\frac{\sum_i li * \alpha i}{\sum_i |li * \alpha i|}\right|$, ledit critère de tirage étant inférieur ou égal à 0,2.

9. Bande de roulement selon l'une quelconque des revendications 1 à 8 **caractérisée en ce que** tout ou partie des éléments en relief des motifs de base comprennent au moins un chanfrein, ledit chanfrein appartenant à une arête des éléments en relief faisant un angle au plus égal à 45 ° avec la direction transversale.

10. Pneumatique neige comportant une bande de roulement selon l'une quelconque des revendications 1 à 9.

## Patentansprüche

1. Asymmetrischer Laufstreifen für einen Winterreifen, der eine Kautschukzusammensetzung enthält, wobei der Laufstreifen (1) eine Lauffläche aufweist, die dazu bestimmt ist, während des Rollens des Reifens mit einem Boden in Kontakt zu sein, wobei der Laufstreifen (1) eine Folge von Grundmustern (3, 5) aufweist, die in der Umfangsrichtung (X) angeordnet sind, wobei jedes Grundmuster sich über mindestens 80% der Breite (W) des Laufstreifens (1) erstreckt, wobei jedes Grundmuster (3, 5) eine Vielzahl von erhöhten Elementen (11a-11k) aufweist, die mit Einschnitten (13i) versehen sind, welche an der Lauffläche münden, wobei jeder Einschnitt eine Breite von weniger als 1 mm und eine Tiefe von mindestens 3 mm hat, wobei der Laufstreifen **dadurch gekennzeichnet ist, dass** für jedes Grundmuster (3, 5) ein Ausrichtungswert der Einschnitte (NO) entsprechend $\frac{\sum_i |li * \alpha i|}{P * Wm}$ definiert wird, wobei i die Anzahl von Einschnitten im Muster, li die Länge des i-ten Einschnitts auf der Lauffläche, P die Umfangslänge des Grundmusters, Wm die Breite des Grundmusters, $\alpha i$ der vom i-ten Einschnitt mit der Querrichtung auf der Lauffläche geformte positive oder negative Winkel ist, mit $|\alpha i| \leq 45$ Grad, wobei der Ausrichtungswert größer als oder gleich 1,5 Grad/mm ist, und dass die Kautschukzusammensetzung mindestens ein Dienelastomer, einen anorganischen Verstärkungsfüllstoff und ein Weichmachersystem aufweist, das einen flüssigen Weichmacher gemäß einem Anteil B zwischen 10 und 60 pce enthält, wobei der flüssige Weichmacher ein Pflanzenöl ist, und dass die Kautschukzusammensetzung 100 bis 160 pce des anorganischen Verstärkungsfüllstoffs enthält.

2. Laufstreifen nach Anspruch 1, **dadurch gekennzeichnet, dass** die Kautschukzusammensetzung 20 bis 100 pce eines mindestens eine Funktion SiOR enthaltenden Dienelastomers aufweist, wobei R Wasserstoff oder ein kohlenwasserstoffhaltiges Radikal ist.

3. Laufstreifen nach einem der Ansprüche 1 oder 2, **dadurch gekennzeichnet, dass** der anorganische Verstärkungsfüllstoff 50 bis 100 Masseprozent Siliciumdioxid enthält.

4. Laufstreifen nach einem der Ansprüche 1 bis 3, **dadurch gekennzeichnet, dass** das Weichmachersystem ein kohlenwasserstoffhaltiges Harz gemäß einem Anteil A zwischen 10 und 60 pce enthält.

5. Laufstreifen nach Anspruch 4, **dadurch gekennzeichnet, dass** der Gesamtanteil A+B höher als 50 pce ist.

6. Laufstreifen nach einem der Ansprüche 1 bis 5, **dadurch gekennzeichnet, dass** das Pflanzenöl ein Sonnenblumenöl ist.

7. Laufstreifen nach einem der Ansprüche 1 bis 6, **dadurch gekennzeichnet, dass** eine Dichte von Einschnitten (D) entsprechend $\frac{\sum_i li}{P * Wm}$ definiert wird, wobei die Dichte von Einschnitten größer als oder gleich 60 $\mu m/mm^2$ ist.

**8.** Laufstreifen nach einem der Ansprüche 1 bis 7, **dadurch gekennzeichnet, dass** ein Zugkriterium (CT) des Grundmusters entsprechend $\left|\frac{\sum_i li * \alpha i}{\sum_i |li * \alpha i|}\right|$ definiert wird, wobei das Zugkriterium geringer als oder gleich 0,2 ist.

**9.** Laufstreifen nach einem der Ansprüche 1 bis 8, **dadurch gekennzeichnet, dass** alle oder ein Teil der erhöhten Elemente der Grundmuster mindestens eine Abschrägung enthalten, wobei die Abschrägung zu einer Kante der erhöhten Elemente gehört, die einen Winkel höchstens gleich 45° mit der Querrichtung bildet.

**10.** Winterreifen, der einen Laufstreifen nach einem der Ansprüche 1 bis 9 aufweist.

## Claims

**1.** Asymmetric tread for a snow tyre comprising a rubber composition, said tread (1) comprising a tread surface intended to be in contact with the ground when the tyre is running, said tread (1) comprising a sequence of basic patterns (3, 5) arranged in the circumferential direction (X), each basic pattern extending over at least 80% of the width (W) of the tread (1), each basic pattern (3, 5) comprising a plurality of raised elements (11a-11k) provided with sipes (13i) opening onto the tread surface, each sipe having a width of less than 1 mm and a depth of at least 3 mm, said tread being **characterized in that**, for each basic pattern (3, 5), a sipes orientation level (NO) is defined that corresponds to $\frac{\sum_i |li * \alpha i|}{P * Wm}$ where i is the number of sipes in the pattern, li is the length of the $i^{th}$ sipe on the tread surface, P is the pitch of the basic pattern, Wm is the width of the basic pattern and $\alpha i$ is the positive or negative angle formed on the tread surface by the $i^{th}$ sipe with the transverse direction, where $|\alpha i| \leq 45$ degrees, said orientation level being greater than or equal to 1.5 degrees/mm and **in that** the rubber composition comprises at least one diene elastomer, a reinforcing inorganic filler, and a plasticizing system comprising a liquid plasticizing agent in a content B of between 10 and 60 phr, said liquid plasticizing agent being a vegetable oil and **in that** the rubber composition comprises 100 to 160 phr of said reinforcing inorganic filler.

**2.** Tread according to Claim 1, **characterized in that** said rubber composition comprises 20 to 100 phr of a diene elastomer bearing at least one SiOR function, R being hydrogen or a hydrocarbon radical.

**3.** Tread according to either one of Claims 1 and 2, **characterized in that** the reinforcing inorganic filler comprises from 50% to 100% by weight of silica.

**4.** Tread according to any one of Claims 1 to 3, **characterized in that** the plasticizing system comprises a hydrocarbon resin in a content A of between 10 and 60 phr.

**5.** Tread according to Claim 4, **characterized in that** the total content A+B is greater than 50 phr.

**6.** Tread according to any one of Claims 1 to 5, **characterized in that** the vegetable oil is a sunflower oil.

**7.** Tread according to any one of Claims 1 to 6, **characterized in that** a sipes density (D) is defined that corresponds to $\frac{\sum_i li}{P * Wm}$, said sipes density (D) being greater than or equal to 60 $\mu m/mm^2$.

**8.** Tread according to any one of Claims 1 to 7, **characterized in that** a steering pull criterion (CT) for the basic pattern

is defined that corresponds to $\left|\frac{\sum_i li * \alpha i}{\sum_i \left|li * \alpha i\right|}\right|$, said steering pull criterion being less than or equal to 0.2.

**9.** Tread according to any one of Claims 1 to 8, **characterized in that** all or some of the raised elements of the basic patterns comprise at least one chamfer, said chamfer belonging to an edge of the raised elements making an angle at most equal to 45° with the transverse direction.

**10.** Snow tyre comprising a tread according to any one of Claims 1 to 9.

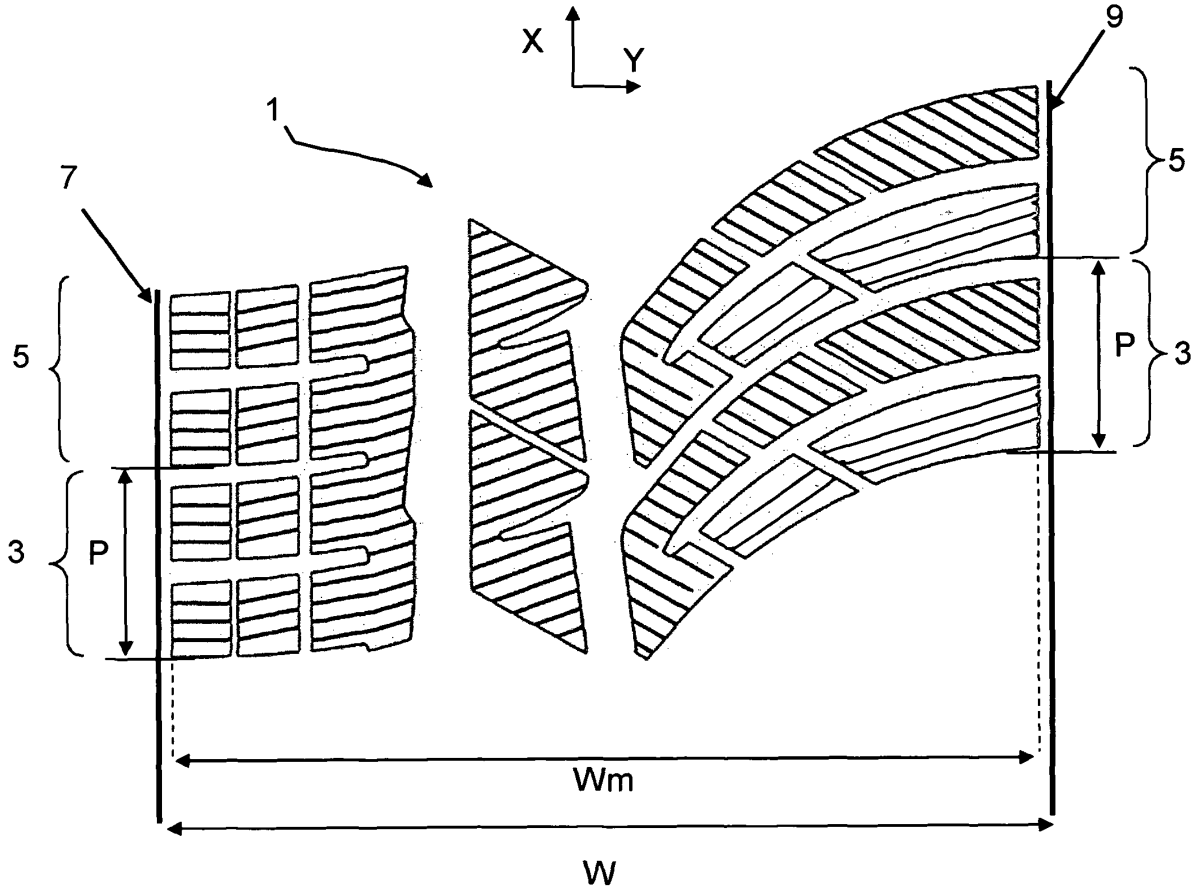


**Fig.1**

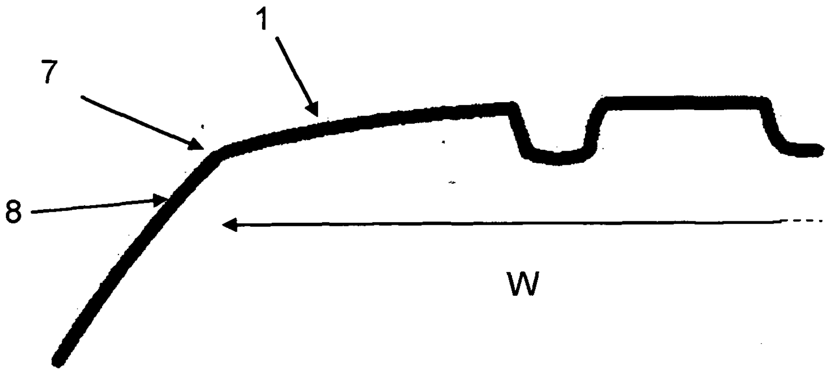


**Fig.2**

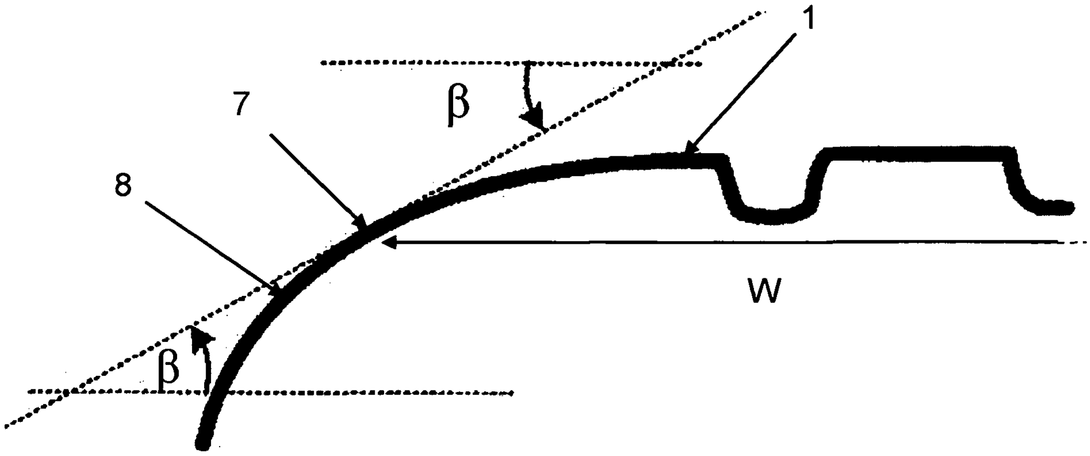
1
7
8
β
β
W

Fig.3

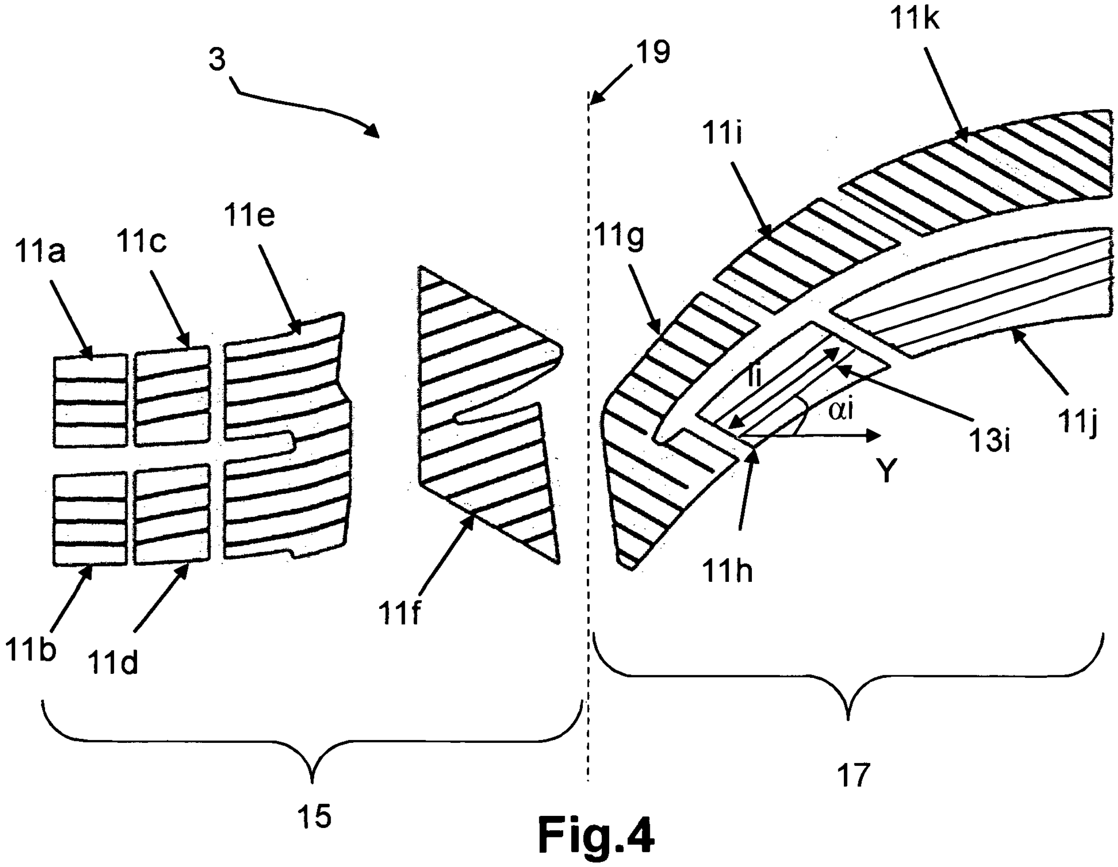
3
19
11k
11i
11a
11c
11e
11g
li
αi
13i
11j
Y
11h
11b
11d
11f
15
17

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1795372 A
- WO 2004022644 A
- EP 0524164 A
- EP 747466 A
- EP 1294581 A
- EP 1329478 A
- EP 1379586 A
- EP 1577341 A
- EP 1730229 A
- EP 0778311 B1
- WO 2008141702 A
- WO 2006050486 A
- EP 0877047 B1
- EP 1400559 B1
- WO 2009000750 A
- JP 63215701 A
- JP 62227908 A
- US 5409969 A
- WO 0316387 A
- WO 03002648 A
- US 2005016651 A
- WO 03002649 A
- US 2005016650 A
- WO 02083782 A
- US 7217751 B
- WO 0210269 A


### Littérature non-brevet citée dans la description


- Rubber Tires and Mechanical Goods. **R. MILDENBERG ; M. ZANDER ; G. COLLIN.** Hydrocarbon Resins. VCH, 1997